# EUROPEAN PATENT APPLICATION

(11) **EP 4 290 180 A1**
(43) Date of publication of application: **13.12.2023**
(21) Application number: 21925427.3
(22) Date of filing: 14.10.2021
(51) Int. Cl.: G01C 21/30, G09B 29/10, G08G 1/0969

(54) **EVENT LOCATION TRANSMISSION METHOD, DEVICE AND SYSTEM**

(30) Priority: 10.02.2021 CN 202110185477
(71) Applicant: Huawei Technologies Co., Ltd., Shenzhen, Guangdong 518129 (CN)
(72) Inventor: FEI, Wenkai, Shenzhen, Guangdong 518129 (CN); LIU, Jianqin, Shenzhen, Guangdong 518129 (CN)
(74) Representative: Huawei European IPR
(86) International application number: PCT/CN2021/123786
(87) International publication number: WO 2022/170776

(57) **Abstract**

An event location transmission method, system, apparatus, and chip, a computer-readable storage medium, and a computer program product are disclosed, to transmit an event location efficiently, conveniently, and fast. The system includes a collection server (100) and a receiving server (110). The collection server (100) is configured to: obtain first information of a target event, where the first information includes a first location of the target event (S300); determine, based on the first information, general location information that is of the target event and that is based on a general map tile (S301 and S302); and send the general location information to the receiving server (110) (S303). The receiving server (110) is configured to: receive the general location information from the collection server (100) (S304), and determine second information based on the general location information, where the second information includes a second location of the target event (S305 and S306). According to the method, in a transmission process, dependency of different map providers on feature information of a target event is effectively reduced, compatibility of location information of the target event is implemented, universality is high, and event location transmission security is effectively ensured.

## Description

### CROSS-REFERENCE TO RELATED APPLICATIONS

This application claims priority to Chinese Patent Application No. 202110185477.1, filed with the China National Intellectual Property Administration on February 10, 2021 and entitled "EVENT LOCATION TRANSMISSION METHOD, APPARATUS, AND SYSTEM", which is incorporated herein by reference in its entirety.

### TECHNICAL FIELD

The present application relates to the field of information collection technologies, and in particular, to an event location transmission method, apparatus, and system.

### BACKGROUND

Currently, in a location transmission process, when collecting location information of an event, to improve security, a collection server often needs to use a data access and operation interface that is for a map-provider map tile and that is provided for the collection server, then determines the location information of the event based on the map-provider map tile, and transmits the obtained location information of the event.

However, because map-provider map tiles adapted to map service providers are often incompatible, when an event location is transmitted in the foregoing manner, flexibility is poor, and universality is low.

### SUMMARY

This application provides an event location transmission method, apparatus, and system, so that an event location can be transmitted efficiently, conveniently, and fast.

It should be understood that the event location transmission method provided in this embodiment of this application may be performed by the event location transmission apparatus and the event location transmission system.

The event location transmission system includes a collection server and a receiving server.

The collection server is configured to collect location information of a target event, thereby obtaining location information that is of the target event and that is based on a first map tile.

In this embodiment of this application, the first map tile may be understood as a general map tile set in this embodiment of this application. In other words, the collection server in this embodiment of this application may determine a location of the target event based on the general map tile, and a map-provider server may obtain, based on a location that is of the target event and that is based on the general map tile, a location that is of the target event and that is based on a map tile adapted to the map-provider server.

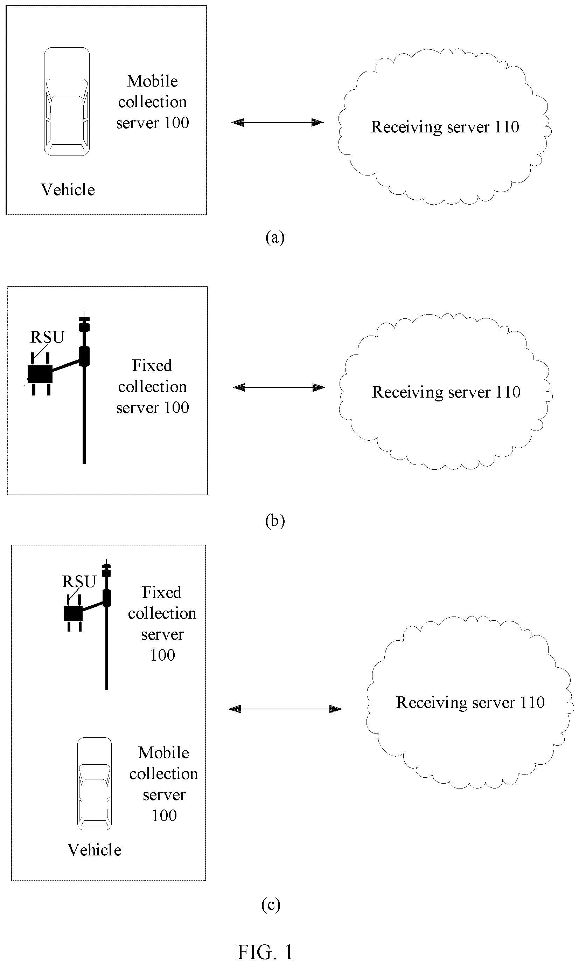

The collection server described in this embodiment of this application may have a plurality of forms, and is not specifically limited to the following several forms:
Form 1: As shown in (a) of FIG. 1, the collection server may be a mobile collection server, for example, a vehicle, or may be a vehicle-mounted electronic apparatus (for example, a mobile data center (mobile data center, MDC)), a vehicle-mounted chip, a processor in a vehicle, or the like. This is not specifically limited in this embodiment of this application.

In addition, in this embodiment of this application, when the collection server is a vehicle, the vehicle may directly communicate with the receiving server, or may indirectly communicate with the receiving server, for example, forwarding and switching are implemented by using an intermediate medium such as a road side unit or a base station.

Further, in an optional manner of this embodiment of this application, when the collection server is a vehicle, the vehicle includes a collection apparatus, a storage apparatus, a processing apparatus, a communication system, a positioning apparatus, and the like.

The collection apparatus is configured to collect feature information of a target event and the like.

An optional collection apparatus in this embodiment of this application may be an apparatus having an image shooting function and a sensing function.

For example, the collection apparatus in this embodiment of this application is a system composed of a combination of an image shooting apparatus and a sensing apparatus, that is, the two apparatuses exist independently, and the two apparatuses are integrally referred to as the collection apparatus. Alternatively, the collection apparatus in this embodiment of this application may be an apparatus obtained by integrating an image shooting apparatus and a sensing apparatus. Alternatively, the collection apparatus in this embodiment of this application may be a sensing apparatus having an image shooting function.

An example in which the collection apparatus is composed of an image shooting apparatus and a sensing apparatus is used for description. The image shooting apparatus of the vehicle in this embodiment of this application may be a monocular camera, a binocular camera, or the like. A photographing region of the image shooting apparatus may be an external environment of the vehicle.

The sensing apparatus of the vehicle is configured to obtain the feature information of the target event, thereby assisting the processing apparatus, the positioning apparatus, and the like in the vehicle in determining the location information of the target event. For example, the sensing apparatus in this embodiment of this application may include a lidar, a millimeter-wave radar, an ultrasonic radar, and the like that are configured to obtain environmental information, and may further include an inertial navigation system and the like that are configured to obtain a pose of the vehicle.

It should be noted that in this embodiment of this application, the image shooting apparatus of the vehicle and the sensing apparatus of the vehicle may be used in combination to collect the feature information of the target event, thereby assisting the processor in determining the location information of the target event.

The storage apparatus of the vehicle is configured to store one or more programs and data information, where the one or more programs include instructions.

The processing apparatus is configured to determine the location information of the target event based on information obtained by the image shooting apparatus, the sensing apparatus, and a global navigation satellite system (Global Navigation Satellite System, GNSS).

The communication system is configured to perform information transmission with the receiving server.

The GNSS is configured to determine a current longitude-and-latitude location of the target event and/or location information that is of the target event and that is based on a map-provider map tile.

For example, the GNSS in this embodiment of this application may include a global positioning system (global positioning system, GPS) of the United States, Galileo of Europe, GLONASS of Russia, BeiDou of China, and the like.

Form 2: As shown in (b) of FIG. 1, the collection server may be a fixed collection server, for example, a road side unit (road side unit, RSU).

In an optional manner of this embodiment of this application, the RSU integrates one or more of a camera, a radar, a GPS, a communication system, a sensing apparatus, and the like, and has a collection function, a processing function, a transceiver function, and the like.

In an optional manner of this embodiment of this application, the location information that is of the target event and that is based on the first map tile is obtained by the collection server based on a longitude-and-latitude location corresponding to the target event.

For example, the collection server determines the longitude-and-latitude location of the target event, and then converts the longitude-and-latitude location of the target event into the location information corresponding to the first map tile.

In another optional manner of this embodiment of this application, the location information that is of the target event and that is based on the first map tile is obtained by the collection server based on map-provider location information that is based on a map-provider map and that corresponds to the target event.

For example, the collection server determines the map-provider location information that is of the target event and that is based on a map-provider map, and then converts the map-provider location information of the target event into the location information based on the first map tile.

It should be noted that the RSU may be replaced with another apparatus having a function similar to that of the RSU. This is not limited herein in this application.

In an optional implementation of embodiments of this application, a method described in a first aspect may be performed by the collection server. The collection server may be a road side unit, a vehicle, or a chip in a vehicle. The following uses the road side unit as an example for execution.

In an optional implementation of embodiments of this application, a method described in a second aspect may be performed by the receiving server. The receiving server may be a map-provider server, a related management department, or the like. This is not specifically limited in the embodiments of this application.

According to the first aspect, an embodiment of this application provides an event location transmission method, including:
A collection server obtains first information of a target event, where the first information includes a first location of the target event; the collection server determines, based on the first information, general location information that is of the target event and that is based on a general map tile; and the collection server sends the general location information to at least one receiving server, so that the receiving server determines second information based on the general location information, where the second information includes a second location of the target event. Based on the foregoing method, a manner of determining a target event based on a general map tile is provided. In a transmission process, dependency of different map providers on feature information of the target event can be effectively reduced; during implementation of event location transmission, compatibility and universality of location information of the target event are high; and requirements for hardware storage and computing resources are lowered. In addition, the location information that is of the target event and that is obtained based on the general map tile is equivalent to an encrypted location of the target event, so that event location transmission security can be effectively ensured.

In a possible implementation, when the first location in the first information is a longitude-and-latitude location of the target event, the collection server converts the first location into the general location information based on a rule of conversion between the longitude-and-latitude location and the general map tile.

Based on the foregoing method, when a collection apparatus in this embodiment of this application collects the first location of the target event, the obtained first location of the target event may be the longitude-and-latitude location of the target event. Based on this case, an embodiment of this application provides the rule of conversion between the longitude-and-latitude location and the general map tile, so that the location information that is of the target event and that is based on the general map tile can be obtained based on the first location.

In a possible implementation, when the first location in the first information is a location that is of the target event and that is determined based on a first map tile, the collection server converts the first location into the general location information based on a rule of conversion between the first map tile and the general map tile.

Based on the foregoing method, when the collection apparatus in this embodiment of this application collects the first location of the target event, the obtained first location of the target event may be a location that is of the target event and that is determined based on the first map tile. Based on this case, an embodiment of this application provides a rule of conversion between the first map tile and the general map tile, so that the location information that is of the target event and that is based on the general map tile can be obtained based on the first location.

In a possible implementation, the collection server determines, based on the rule of conversion between the first map tile and the general map tile, coordinates that are of the general map tile and that correspond to the first map tile; and the collection server determines, based on the coordinates of the general map tile and an anchor point of the general map tile, the location information that is of the target event and that is based on the general map tile.

Based on the foregoing method, an embodiment of this application provides a manner of determining, based on the conversion rule, the location information that is of the target event and that is based on the general map tile, namely, a manner including: determining, based on the conversion rule, the coordinates that are of the general map tile and that correspond to the first map tile, and then determining, based on the coordinates of the general map tile and the anchor point of the general map tile, the location information that is of the target event and that is based on the general map tile.

In a possible implementation, the anchor point of the general map tile is a central point or a corner point of the general map tile; or the anchor point of the general map tile is obtained by performing encoding calculation based on the coordinates of the general map tile.

Based on the foregoing method, an embodiment of this application provides a plurality of manners of determining the anchor point of the general map tile. For example, the central point or the corner point of the general map tile is determined as the anchor point of the general map tile. For another example, encoding calculation is performed on the coordinates of the general map tile, to obtain the anchor point of the general map tile.

In a possible implementation, the collection server equally divides the general map tile horizontally and vertically based on a horizontal coordinate and a vertical coordinate in encoded coordinates; and determines, based on hierarchical coordinates in the encoded coordinates, the anchor point from the first map tile that is equally divided horizontally and vertically.

Based on the foregoing method, an embodiment of this application provides a manner of performing encoding calculation on the coordinates of the general map tile to obtain the anchor point, for example, a manner including: equally dividing the general map tile horizontally and vertically based on the horizontal coordinate and the vertical coordinate in the encoded coordinates, and then determining, based on the hierarchical coordinates in the encoded coordinates, the anchor point from the general map tile that is equally divided horizontally and vertically.

It should be noted that, in this embodiment of this application, the receiving server that performs the event location transmission method in this application with the collection server is a receiving server that is authenticated by the collection server in this embodiment of this application. In this embodiment of this application, the receiving server that is authenticated by the collection server may be understood as a receiving server that has a qualification to obtain a rule of conversion between the general map tile in this embodiment of this application and a map-provider map tile, and/or a receiving server that has a qualification to obtain the rule of conversion between the general map tile in this embodiment of this application and the longitude-and-latitude location.

In a possible implementation, the rule of conversion between the general map tile and the map-provider map tile and/or the rule of conversion between the general map tile and the longitude-and-latitude location are/is stored in local storage apparatuses/a local storage apparatus of the collection server and/or the receiving server.

In a possible implementation, the rule of conversion between the general map tile and the map-provider map tile and/or the rule of conversion between the general map tile and the longitude-and-latitude location are/is stored in a third-party storage platform that can be accessed by the collection server and the receiving server.

It should be noted that a receiving server storing the foregoing conversion rule has a qualification to obtain the conversion rule.

In a possible implementation, the collection server determines, based on an identifier of the receiving server and a list that is stored in the collection server and that is of identifiers of receiving servers having qualifications to obtain the conversion rule, whether authentication for the receiving server succeeds.

According to the second aspect, an embodiment of this application provides an event location transmission method, including:
A receiving server receives general location information from a collection server, where the general location information is used to determine a location of a target event in a general map tile, the general location information is obtained based on first information of the target event, and the first information includes a first location of the target event; and the receiving server determines second information based on the general location information, where the second information includes a second location of the target event.

Based on the foregoing method, a manner of determining a target event based on a general map tile is provided. In a transmission process, dependency of different map providers on feature information of the target event can be effectively reduced; during implementation of event location transmission, compatibility and universality of location information of the target event are high; and requirements for hardware storage and computing resources are lowered. In addition, the location information that is of the target event and that is obtained based on the general map tile is equivalent to an encrypted location of the target event, so that event location transmission security can be effectively ensured.

In a possible implementation, the receiving server converts the general location information into the second location based on a rule of conversion between a longitude-and-latitude location and the general map tile, where the second location is the longitude-and-latitude location of the target event.

Based on the foregoing method, in this embodiment of this application, after receiving the general location information, if the receiving server needs to determine the longitude-and-latitude location of the target event based on the general location information, the receiving server may obtain, based on the rule of conversion between the longitude-and-latitude location and the general map tile and based on the received general location information, location information that is of the target event and that is based on the second map tile, namely, the second location.

In a possible implementation, the receiving server converts the general location information into the second location based on a rule of conversion between a second map tile and the general map tile, where the second location is a location that is of the target event and that is determined based on the second map tile.

Based on the foregoing method, when the receiving server in this embodiment of this application collects the first location of the target event, the obtained first location of the target event may be a location that is of the target event and that is determined based on the general map tile. Based on this case, an embodiment of this application provides a rule of conversion between a first map tile and the general map tile, so that the location information that is of the target event and that is determined based on the general map tile can be obtained based on the general location information.

In a possible implementation, the receiving server determines, based on the rule of conversion between the second map tile and the general map tile, coordinates that are of the second map tile and that correspond to the general map tile; and determines, based on the coordinates of the second map tile and an anchor point of the second map tile, location information that is of the target event and that is based on the second map tile.

Based on the foregoing method, an embodiment of this application provides a manner of determining, based on the conversion rule, the location information that is of the target event and that is based on the second map tile, namely, a manner including: determining, based on the conversion rule, the coordinates that are of the second map tile and that correspond to the general map tile, and then determining, based on the coordinates of the second map tile and the anchor point of the second map tile, the location information that is of the target event and that is based on the second map tile.

In a possible implementation, the anchor point of the second map tile is a central point or a corner point of the second map tile; or the anchor point of the second map tile is obtained by performing encoding calculation based on the coordinates of the second map tile.

Based on the foregoing method, an embodiment of this application provides a plurality of manners of determining the anchor point of the second map tile. For example, the central point or the corner point of the second map tile is determined as the anchor point of the second map tile. For another example, encoding calculation is performed on the coordinates of the second map tile, to obtain the anchor point of the second map tile.

In a possible implementation, the receiving server equally divides the second map tile horizontally and vertically based on a horizontal coordinate and a vertical coordinate in encoded coordinates; and determines, based on hierarchical coordinates in the encoded coordinates, the anchor point from the second map tile that is equally divided horizontally and vertically.

Based on the foregoing method, an embodiment of this application provides a manner of performing encoding calculation on the coordinates of the second map tile to obtain the anchor point, for example, a manner including: equally dividing the second map tile horizontally and vertically based on the horizontal coordinate and the vertical coordinate in the encoded coordinates, and then determining, based on the hierarchical coordinates in the encoded coordinates, the anchor point from the second map tile that is equally divided horizontally and vertically.

It should be noted that, in this embodiment of this application, the receiving server that performs the event location transmission method in this application with the collection server is a receiving server that is authenticated by the collection server in this embodiment of this application. In this embodiment of this application, the receiving server that is authenticated by the collection server may be understood as a receiving server that has a qualification to obtain a rule of conversion between the general map tile in this embodiment of this application and a map-provider map tile, and/or a receiving server that has a qualification to obtain the rule of conversion between the general map tile in this embodiment of this application and the longitude-and-latitude location.

In a possible implementation, the rule of conversion between the general map tile and the map-provider map tile and/or the rule of conversion between the general map tile and the longitude-and-latitude location are/is stored in local storage apparatuses/a local storage apparatus of the collection server and/or the receiving server.

In a possible implementation, the rule of conversion between the general map tile and the map-provider map tile and/or the rule of conversion between the general map tile and the longitude-and-latitude location are/is stored in a third-party storage platform that can be accessed by the collection server and the receiving server.

It should be noted that a receiving server storing the foregoing conversion rule has a qualification to obtain the conversion rule.

According to a third aspect, an embodiment of this application further provides an event location transmission apparatus. The apparatus may be configured to perform an operation according to any possible implementation of the first aspect or the second aspect. For example, the apparatus may include modules or units configured to perform operations according to any possible implementation of the first aspect and the second aspect. For example, the apparatus includes a transceiver module and a processing module.

According to a fourth aspect, an embodiment of this application provides a chip system, including a processor, and optionally further including a memory. The memory is configured to store a computer program. The processor is configured to: invoke the computer program from the memory, and run the computer program, so that an event location transmission apparatus on which the chip system is installed is enabled to perform the method according to any possible implementation of the first aspect or the second aspect.

According to a fifth aspect, an embodiment of this application provides an event location transmission system. The system includes a collection server and at least one receiving server.

The collection server is configured to: obtain first information of a target event, where the first information includes a first location of the target event; determine, based on the first information, general location information that is of the target event and that is based on a general map tile; and send the general location information to at least one map-provider server.

The receiving server is configured to: receive the general location information from the collection server, and determine second information based on the general location information, where the second information includes a second location of the target event.

Based on the foregoing method, a system for determining a target event based on a general map tile is provided. In a transmission process performed by using the system, dependency of different map providers on feature information of the target event can be effectively reduced; during implementation of event location transmission, compatibility and universality of location information of the target event are high; and requirements for hardware storage and computing resources are lowered. In addition, the location information that is of the target event and that is obtained based on the general map tile is equivalent to an encrypted location of the target event, so that event location transmission security can be effectively ensured.

According to a sixth aspect, an embodiment of this application provides a computer program product. The computer program product includes computer program code. When the computer program code is run by a transceiver module and a processing module in an event location transmission apparatus or a transceiver and a processor in an event location transmission apparatus, the event location transmission apparatus is enabled to perform the method according to any possible implementation of the first aspect or the second aspect.

According to a seventh aspect, an embodiment of this application provides a computer-readable storage medium. The computer-readable storage medium stores a program, and the program enables an event location transmission apparatus to perform the method according to any possible implementation of the first aspect or the second aspect.

### BRIEF DESCRIPTION OF DRAWINGS

FIG. 1 is a schematic diagram of an event location transmission system according to an embodiment of this application;
FIG. 2 is a schematic diagram of a vehicle according to an embodiment of this application;
FIG. 3 is a schematic diagram of an event location transmission method according to an embodiment of this application;
FIG. 4 is a schematic diagram of map mapping according to this application;
FIG. 5 is a schematic diagram of a selection scenario of an anchor point according to an embodiment of this application;
FIG. 6 is a schematic diagram of a scenario of a conversion method according to an embodiment of this application;
FIG. 7 is a schematic diagram of description of a target event according to an embodiment of this application;
FIG. 8 is a schematic diagram of a first application scenario according to an embodiment of this application;
FIG. 9 is a schematic diagram of a second application scenario according to an embodiment of this application;
FIG. 10 is a schematic diagram of a first event location transmission apparatus according to this application;
FIG. 11 is a schematic diagram of a second event location transmission apparatus according to this application; and
FIG. 12 is a schematic diagram of a third event location transmission apparatus according to this application.

### DESCRIPTION OF EMBODIMENTS

Currently, in a location transmission process, when collecting location information of an event, to improve security, a collection server often needs to use a data access and operation interface that is for a map-provider map tile and that is provided for the collection server, then determines the location information of the event based on the map-provider map tile, and transmits the obtained location information of the event.

However, because map-provider map tiles adapted to map service providers are often incompatible, when an event location is transmitted in the foregoing manner, flexibility is poor, and universality is low.

To resolve this problem, embodiments of this application provide an event location transmission method, apparatus, and system, to provide an efficient, fast, and universal event location transmission method.

To facilitate understanding of the embodiments of this application, an embodiment of this application provides an event location transmission system. As shown in FIG. 1, the system includes a collection server 100 and a receiving server 110.

The collection server 100 is configured to collect location information of a target event, thereby obtaining general location information that is of the target event and that is based on a general map tile.

In this embodiment of this application, a general map tile is set. In this embodiment of this application, the collection server may determine the location information of the target event based on the general map tile; and the receiving server may determine, based on the general location information of the target event, location information that is of the target event and that is based on a map tile adapted to the receiving server.

In an optional manner of this embodiment of this application, the collection server may be provided with a conversion interface for the general map tile. The conversion interface for the general map tile is used by the collection server to convert collected first information of the target event into general location information that is of the target event and that is based on the general map tile.

The collection server described in this embodiment of this application may have a plurality of forms, and is not specifically limited to the following several forms:
Form 1: As shown in (a) of FIG. 1, the collection server may be a mobile collection server, for example, a vehicle, or may be a vehicle-mounted electronic apparatus (for example, a mobile data center (mobile data center, MDC)), a vehicle-mounted chip, a processor in a vehicle, or the like. This is not specifically limited in this embodiment of this application.

In addition, in this embodiment of this application, when the collection server is a vehicle, the vehicle may directly communicate with the receiving server, or may indirectly communicate with the receiving server, for example, forwarding and switching are implemented by using an intermediate medium such as a road side unit or a base station.

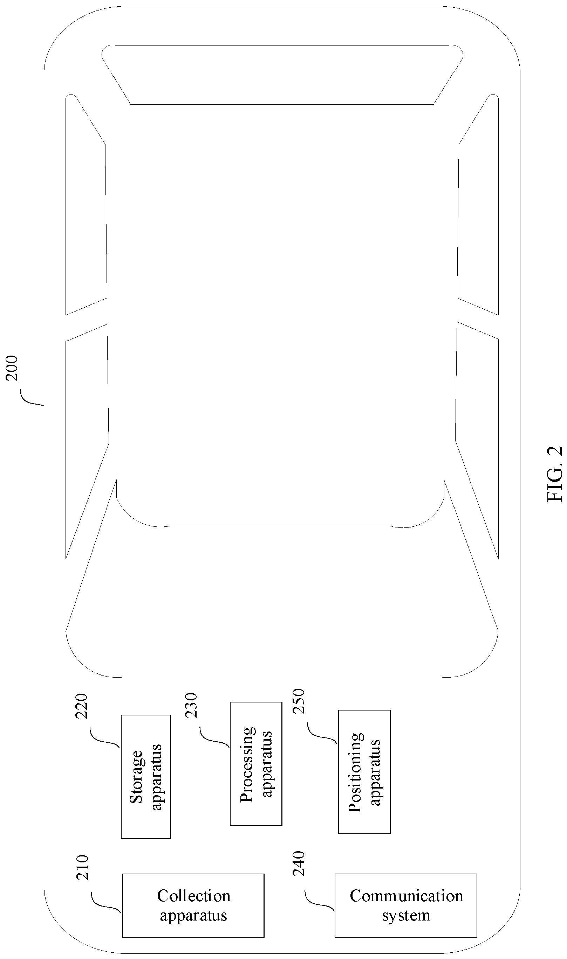

Further, in an optional manner of this embodiment of this application, as shown in FIG. 2, when the collection server is a vehicle, the vehicle includes a collection apparatus 210, a storage apparatus 220, a processing apparatus 230, a communication system 240, a positioning apparatus 250, and the like.

The collection apparatus 210 is configured to collect feature information of a target event and the like.

An optional collection apparatus in this embodiment of this application may be an apparatus having an image shooting function and a sensing function.

For example, the collection apparatus in this embodiment of this application is a system composed of a combination of an image shooting apparatus and a sensing apparatus, that is, the two apparatuses exist independently, and the two apparatuses are integrally referred to as the collection apparatus. Alternatively, the collection apparatus in this embodiment of this application may be an apparatus obtained by integrating an image shooting apparatus and a sensing apparatus. Alternatively, the collection apparatus in this embodiment of this application may be a sensing apparatus having an image shooting function.

An example in which the collection apparatus is composed of an image shooting apparatus and a sensing apparatus is used for description. The image shooting apparatus of the vehicle in this embodiment of this application may be a monocular camera, a binocular camera, or the like. A photographing region of the image shooting apparatus may be an external environment of the vehicle.

The sensing apparatus of the vehicle is configured to obtain the feature information of the target event, thereby assisting the processing apparatus, the positioning apparatus, and the like in the vehicle in determining the location information of the target event. For example, the sensing apparatus in this embodiment of this application may include a lidar, a millimeter-wave radar, an ultrasonic radar, and the like that are configured to obtain environmental information, and may further include an inertial navigation system and the like that are configured to obtain a pose of the vehicle.

It should be noted that in this embodiment of this application, the image shooting apparatus of the vehicle and the sensing apparatus of the vehicle may be used in combination to collect the feature information of the target event, thereby assisting the processor in determining the location information of the target event.

The storage apparatus 220 of the vehicle is configured to store one or more programs and data information, where the one or more programs include instructions.

The processing apparatus 230 is configured to determine the location information of the target event based on information obtained by the image shooting apparatus, the sensing apparatus, and a global navigation satellite system (Global Navigation Satellite System, GNSS).

The communication system 240 is configured to perform information transmission with the receiving server.

The positioning apparatus (GNSS) 250 is configured to determine a current longitude-and-latitude location of the target event and/or location information that is of the target event and that is based on a map-provider map tile.

For example, the GNSS in this embodiment of this application may include a global positioning system (global positioning system, GPS) of the United States, Galileo of Europe, GLONASS of Russia, BeiDou of China, and the like.

Form 2: As shown in (b) of FIG. 1, the collection server may be a fixed collection server, for example, a road side unit (road side unit, RSU).

In an optional manner of this embodiment of this application, the RSU integrates one or more of a camera, a radar, a GPS, a communication system, a sensing apparatus, and the like, and has a collection function, a processing function, a transceiver function, and the like.

In an optional manner of this embodiment of this application, the general location information of the target event is obtained by the collection server based on a longitude-and-latitude location corresponding to the target event.

For example, the collection server determines the longitude-and-latitude location of the target event, and then converts the longitude-and-latitude location of the target event into the general location information.

In another optional manner of this embodiment of this application, the general location information of the target event is obtained by the collection server based on location information that is of a map tile and that corresponds to the target event.

For example, the collection server determines location information that is of the target event and that is based on a map tile. For example, the collection server determines a first location that is of the target event and that is based on a map tile of a map provider C, and then converts the first location of the target event into the general location information.

Form 3: As shown in (c) of FIG. 1, the collection server may include a mobile collection server and a fixed collection server, for example, a road side unit (road side unit, RSU).

It should be noted that the RSU may be replaced with another apparatus having a function similar to that of the RSU. This is not limited herein in this application.

The receiving server 110 is an apparatus having functions of receiving, sending, and processing, and is configured to: communicate with the collection server and the like, and process the general location information of the target event received from the collection server, to obtain second information and the like of the target event.

In an optional manner of this embodiment of this application, the receiving server may be provided with a conversion interface for the general map tile. The conversion interface for the general map tile is used to convert the received general location information of the target event into a second location of the target event.

System architectures and service scenarios described in embodiments of this application are intended to describe technical solutions in the embodiments of this application more clearly, but are not intended to limit the technical solutions provided in the embodiments of this application. In addition, a person of ordinary skill in the art may be aware that with the evolution of a network architecture and the emergence of a new service scenario, the technical solutions provided in the embodiments of this application are also applicable to similar technical problems. It should be understood that FIG. 1 to FIG. 2 are merely simplified schematic diagrams illustrated for ease of understanding. The system architecture may further include another device or may further include another unit module.

Some terms in embodiments of this application are explained and described below for ease of understanding.
(1) Map tile: In this embodiment of this application, a map-tile pyramid model is a multi-resolution hierarchical model. From a bottom layer to a top layer of a tile pyramid, resolution becomes lower, but a geographical range represented by the tile pyramid remains unchanged.
(2) Coordinates of a map tile: The coordinates may be represented by three-dimensional coordinates, for example, (x, y, z). Herein, x and y denote numbers on a plane, and z denotes a tile layer.

Optionally, in this embodiment of this application, the coordinates of the map tile may alternatively be represented as a string of digital information, for example, 201203. A layer of the tile is represented by using digits in the ones and tens places of the string of digital information together. A number of the tile on a y-axis is represented by using digits in the thousands and hundreds places of the string of digital information together. A number of the tile on an x-axis is represented by using a digit in the ten thousands place of the string of digital information. In other words, the string of digital information 201203 indicates a map tile having an x-axis number of 20, a y-axis number of 12, and a tile layer of 3.

Different map providers may use different map-tile coordinate systems, and different map-tile coordinate systems have different coordinate-system origins, different coordinate-system axis directions, and the like. As a result, locations that are of a target event and that are obtained based on different map-tile coordinate systems are incompatible.

(3) Source event information file: In this embodiment of this application, the source event information file is mainly used to describe basic information of a corresponding target event, for example, a first location of the target event. The first location of the target event may be a longitude-and-latitude location, or may be a location obtained based on a first map-provider map tile.

In addition, the source event information file may further include a severity level of the target event (for example, the severity level may be one of a level 10 to a level 1, where the level 10 represents the lowest level, and the level 1 represents the highest level), a type of the target event, and the like.

In an optional manner of this embodiment of this application, the source event information file may be in a form of a table or in a form of a document. This is not limited in this embodiment of this application.

For example, it is assumed that a source event information file of a target event 1 is a file shown in the following Table 1:

| Source event information file of a target event 1 | |
|---|---|
| Type of the target event | Fire |
| Location of the target event | Longitude x, latitude y |
| Severity level of the target event | Level 3 |

In addition, the terms "system" and "network" in embodiments of this application may be used interchangeably. "At least one" means one or more, and "a plurality of" means two or more. The term "and/or" describes an association relationship between associated objects and represents that three relationships may exist. For example, A and/or B may represent the following three cases: Only A exists, both A and B exist, and only B exists. A and B may be in a singular or plural form. A character "/" generally indicates an "or" relationship between associated objects. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Unless otherwise stated, ordinal numbers such as "first" and "second" mentioned in embodiments of this application are used to distinguish between a plurality of objects, and are not intended to limit a sequence, a time sequence, priorities, or importance of the plurality of objects. In addition, the terms "include" and "have" in embodiments, claims, and accompanying drawings of this application are not exclusive. For example, a process, a method, a system, a product, or a device including a series of steps or modules is not limited to the listed steps or modules, and may further include steps or modules that are not listed.

Further, an event location transmission method provided in an embodiment of this application is mainly applied to the system architecture shown in FIG. 1. In this embodiment of this application, the event location transmission system architecture includes at least one collection server and at least one receiving server.

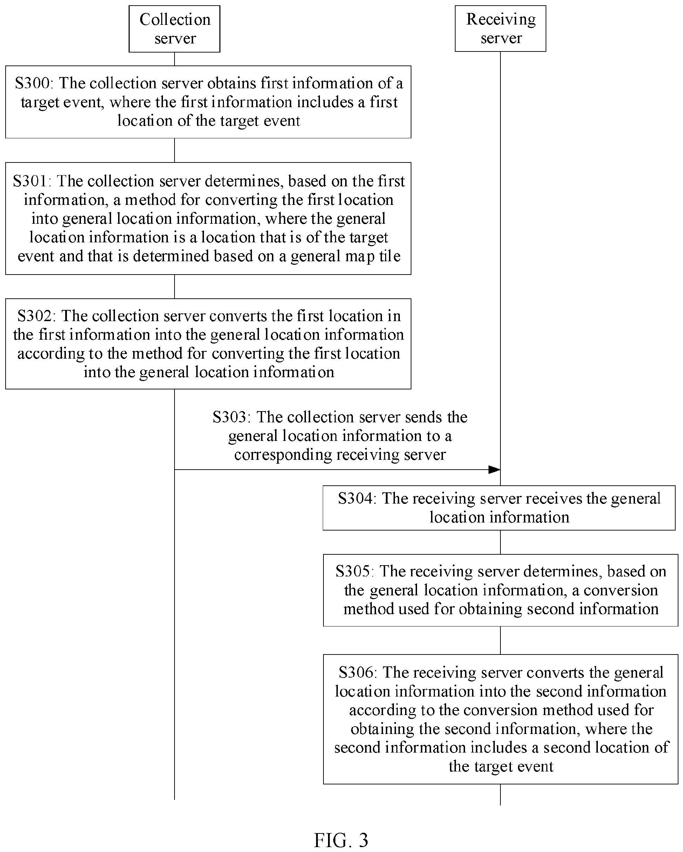

Specifically, as shown in FIG. 3, the event location transmission method provided in this embodiment of this application includes the following steps:
S300: A collection server obtains first information of a target event, where the first information includes a first location of the target event.

In this embodiment of this application, the first information of the target event may be understood as a source event information file that is of the target event and that is obtained by the collection server.

In this embodiment of this application, the first location of the target event may be a longitude-and-latitude location of the target event, or may be a first location that is of the target event and that is obtained based on a first map tile.

S301: The collection server determines, based on the first information, a method for converting the first location into general location information, where the general location information is a location that is of the target event and that is determined based on a general map tile.

S302: The collection server converts the first location in the first information into the general location information according to the method for converting the first location into the general location information.

In an optional manner of this embodiment of this application, during actual application, the collection server may be provided with a conversion interface for the general map tile. The conversion interface for the general map tile has functions of determining a conversion method for the general location information, and converting the first information into the general location information according to the conversion method for the general location information. Therefore, content of S301 and S302 may be further simplified to inputting the first information into the conversion interface for the general map tile, to obtain the general location information.

S303: The collection server sends the general location information to a corresponding receiving server.

In this embodiment of this application, there is a correspondence between the collection server and the receiving server. For example, one collection server corresponds to a plurality of receiving servers, or one collection server corresponds to one receiving server.

In an optional manner of this embodiment of this application, the collection server in this embodiment of this application may determine, based on a correspondence between a collection-server identifier and a receiving-server identifier, the receiving server to which the general location information needs to be sent.

S304: The receiving server receives the general location information.

S305: The receiving server determines, based on the general location information, a conversion method used for obtaining second information.

S306: The receiving server converts the general location information into the second information according to the conversion method used for obtaining the second information, where the second information includes a second location of the target event.

In an optional manner of this embodiment of this application, during actual application, the receiving server may be provided with a conversion interface for the general map tile. The conversion interface for the general map tile has functions of determining a conversion method for the second information, and converting the general location information into the second information according to the conversion method for the second information. Therefore, content of S305 and S306 may be further simplified to inputting the general location information into the conversion interface for the general map tile, to obtain the second information.

It should be noted that, in this embodiment of this application, the receiving server that performs the event location transmission method in this application with the collection server is a receiving server that is authenticated by the collection server in this embodiment of this application. In this embodiment of this application, the receiving server that is authenticated by the collection server may be understood as a receiving server that has a qualification to obtain a rule of conversion between the general map tile in this embodiment of this application and a map-provider map tile, and/or a receiving server that has a qualification to obtain the rule of conversion between the general map tile in this embodiment of this application and the longitude-and-latitude location.

In an optional manner of this embodiment of this application, the collection server in this embodiment of this application may determine, based on an identifier of a receiving server, whether authentication for the receiving server succeeds.

For example, it is assumed that the collection server locally stores a list of identifiers of receiving servers having qualifications to obtain the conversion rule. For example, the list of identifiers of receiving servers having qualifications to obtain the conversion rule is shown in the following Table 2.

| List of identifiers of receiving servers having qualifications to obtain the conversion rule |
|---|
| Receiving server 1 |
| Receiving server 2 |
| Receiving server 3 |

It is assumed that receiving servers served by the collection server are receiving servers 1 to 5. After the collection server obtains the first location of the target event, it can be learned from content of Table 2 that the collection server may use, with the receiving servers 1 to 3, the event location transmission method in this embodiment of this application. In this case, the collection server may send the general location information to the receiving servers 1 to 3 after determining the general location information corresponding to the first location.

Further, in this embodiment of this application, the rule of conversion between the general map tile and the map-provider map tile and/or the rule of conversion between the general map tile and the longitude-and-latitude location may be stored in local storage apparatuses/a local storage apparatus of the collection server and/or the receiving server (having qualifications/a qualification to obtain the conversion rule). For another example, the conversion rule may be stored in a third-party storage platform that can be accessed by the collection server and the receiving server. This is not limited in this embodiment of this application.

According to this embodiment of this application, a manner of determining a target event based on a general map tile is provided. In a transmission process, dependency of different map providers on feature information of the target event can be effectively reduced; during implementation of event location transmission, compatibility and universality of location information of the target event are high; and requirements for hardware storage and computing resources are lowered. In addition, the general location information that is of the target event and that is obtained based on the general map tile is equivalent to an encrypted location of the target event, so that event location transmission security can be effectively ensured.

Further, the general map tile used in embodiments of this application have a plurality of cases, and is not specifically limited to the following several cases:
General map tile 1: In this embodiment of this application, a map-provider map tile in a map-provider map tile library is determined as the general map tile used in the embodiments of this application.

For example, it is assumed that there are five map-provider map tiles in the map-provider map tile library, for example, a map tile of a map provider A, a map tile of a map provider B, a map tile of a map provider C, a map tile of a map provider D, and a map tile of a map provider E.

In this embodiment of this application, a map-provider map tile may be selected from the five map-provider map tiles as the general map tile used in the embodiments of this application. For example, the map tile of the map provider A is selected as the general map tile.

General map tile 2: In this embodiment of this application, a planar map is divided based on a preset division rule, to obtain the general map tile.

Specifically, tile division is performed on the planar map based on the preset division rule, to obtain at least one layer of general map tiles, where each layer of the general map tiles includes at least one general map tile. A coordinate system of the general map tile is set, so as to determine coordinates of the general map tile based on the set coordinate system of the general map tile.

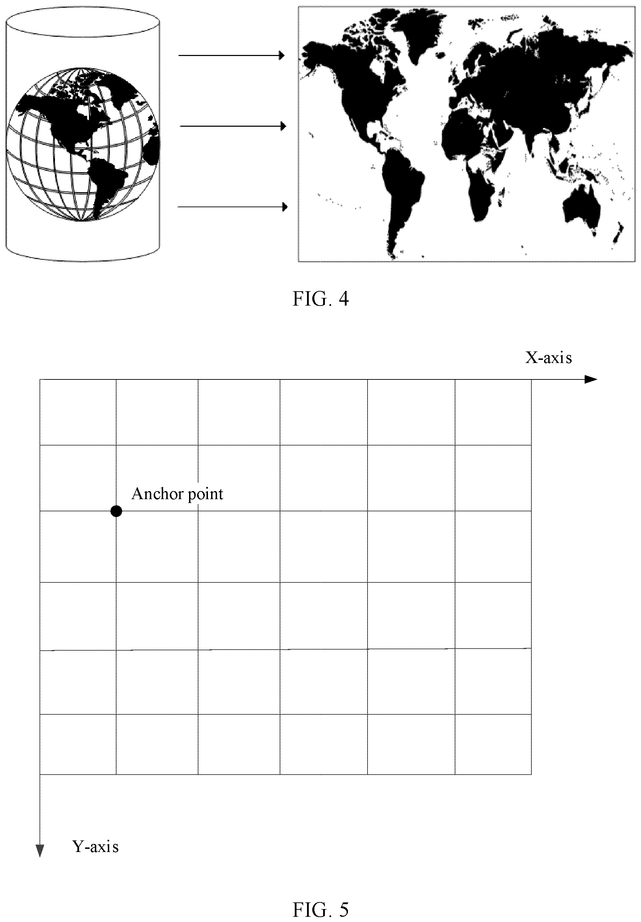

For example, as shown in FIG. 4, for better presentation, points in a three-dimensional space are often mapped onto a two-dimensional space in a projection manner, thereby establishing a one-to-one correspondence between points on earth's surface and points on a projection plane. For example, in an Internet map, points in a three-dimensional space are usually mapped onto a two-dimensional space in a Mercator projection manner, thereby obtaining a planar map.

Then, tile division is performed on the obtained planar map. Assuming that one layer of tiles is obtained after the tile division is performed on the planar map, the layer includes one tile. Assuming that two layers of tiles are obtained after the tile division is performed on the planar map, a planar map whose level is 0 includes one tile, and a planar map whose level is 1 includes at least two tiles.

In an optional manner of this embodiment of this application, an anchor point of the general map tile is used as an anchor point of a map-provider map tile corresponding to the general map tile. For example, the map tile of the map provider A is selected as the general map tile. In this case, an anchor point determining manner of the map tile of the map provider A is an anchor point determining manner of the general map tile.

In another optional manner of this embodiment of this application, the anchor point of the general map tile is a fixed point in the general map tile. For example, a central point or a corner point of the general map tile is determined as the anchor point of the general map tile.

In another optional manner of this embodiment of this application, the anchor point of the general map tile is determined based on the coordinates of the general map tile.

For example, the anchor point of the general map tile is obtained by performing encoding calculation based on the coordinates of the general map tile.

Specifically, the first map tile is equally divided horizontally and vertically based on a horizontal coordinate and a vertical coordinate in encoded coordinates; and the anchor point is determined, based on hierarchical coordinates in the encoded coordinates, from the first map tile that is equally divided horizontally and vertically.

An encoding manner is multiplying x, y, and z in coordinates (x, y, z) by a corresponding coefficient k, to obtain encoded coordinates (kx, ky, kz).

For example, assuming that coordinates of the general map tile are (9, 9, 3), encoding is performed on the coordinates (9, 9, 2). The encoding coefficient k is 7, and the encoded coordinates are (63, 63, 21).

Then, as shown in FIG. 5, the general map tile is equally divided horizontally based on an absolute value of a high-order digit of a value of x in the encoded coordinates, that is, the general map tile is equally divided horizontally into six parts because the absolute value of the high-order digit of the value of x in the encoded coordinates is 6. The general map tile is equally divided vertically based on an absolute value of a high-order digit of a value of y in the encoded coordinates, that is, the general map tile is equally divided vertically into six parts because the absolute value of the high-order digit of the value of y in the encoded coordinates is 6. Finally, as shown in FIG. 5, a point that corresponds to a high-order digit of a value of z in the encoded coordinates and that is in the general map tile equally divided horizontally and vertically is determined as the anchor point. In other words, a second point in the general map tile that is equally divided horizontally and vertically into 6x6 parts is determined as the anchor point.

Further, in this embodiment of this application, after the general map tile is determined, a method for converting between the general map tile and at least one map-provider map tile and/or a method for converting between the general map tile and a longitude-and-latitude location further need/needs to be determined based on the general map tile. The methods are described below separately.

Case 1: A method for converting between the general map tile and at least one map-provider map tile is determined in this embodiment of this application.

In an optional manner of this embodiment of this application, a method for converting the general map tile into the at least one map-provider map tile is determining a coordinate shift from the general map tile to the map-provider map tile based on a coordinate system of the general map tile and a coordinate system of the map-provider map tile; and a method for converting the at least one map-provider map tile into the general map tile is determining a coordinate shift from the map-provider map tile to the general map tile.

For example, conversion from the map tile of the map provider C to the general map tile is used as an example for description.

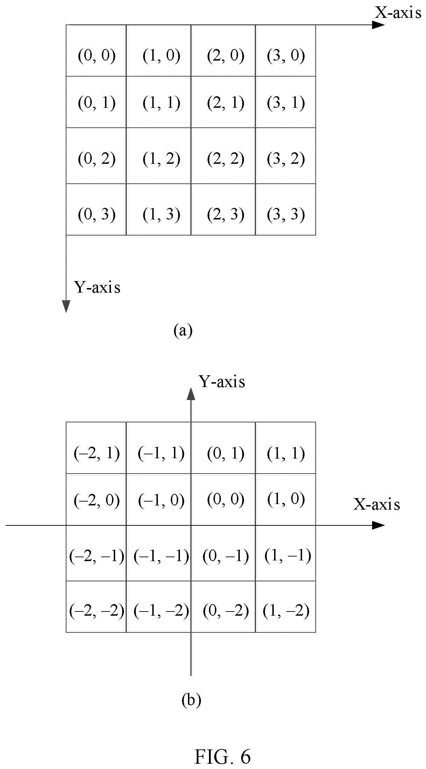

It is assumed that a coordinate system of the map tile of the map provider C is shown in (a) of FIG. 6, and that a coordinate system of the general map tile is shown in (b) of FIG. 6. It may be learned that a coordinate shift of the general map tile relative to the map tile of the map provider C includes a horizontal coordinate shift of two units and a vertical coordinate shift of one unit.

Therefore, it can be learned from the coordinate shift that a method for converting the general map tile into the map tile of the map provider C includes: shifting horizontal coordinates rightwards by two units and shifting vertical coordinates upwards by one unit; and a method for converting the map tile of the map provider C to the general map tile includes: shifting horizontal coordinates leftwards by two units and shifting vertical coordinates downwards by two units.

It should be noted that the foregoing methods for converting between the general map tile and the map-provider map tile are merely examples, and do not constitute a limitation on this embodiment of this application. In this embodiment of this application, a method for converting between a general map tile and a map-provider map tile may be set in a plurality of manners based on an actual situation. For example, encryption encoding may also be used in a process of converting between the general map tile and the map-provider map tile, that is, the conversion is not as simple as the coordinate-system conversion shown in FIG. 6. The encryption encoding may be a function mapping relationship or a dynamic encryption encoding manner. This is not limited in this embodiment of this application.

Further, in this embodiment of this application, after the method for converting between the general map tile and the at least one map-provider map tile is determined, a correspondence in the method for converting between the general map tile and the map-provider map tile may be stored. For example, the correspondence may be stored in local storage apparatuses/a local storage apparatus of the collection server and/or the receiving server. For another example, the correspondence may be stored in a third-party storage platform that can be accessed by the collection server and the receiving server. This is not limited in this embodiment of this application.

For example, it is assumed that the correspondence in the method for converting between the general map tile and the map-provider map tile is shown in the following Table 3:

**Table 3 Method for converting between a map-provider map tile and a general map tile**

| Before conversion | After conversion | Applicable conversion method |
|---|---|---|
| General map tile | Map-provider map tile adapted to a map provider A (Map tile of the map provider A for short) | Conversion method 1 |
| | Map-provider map tile adapted to a map provider B (Map tile of the map provider B for short) | Conversion method 2 |
| | Map-provider map tile adapted to a map provider C (Map tile of the map provider C for short) | Conversion method 3 |
| Map tile of the map provider A | General map tile | Conversion method 4 |
| Map tile of the map provider B | | Conversion method 5 |
| Map tile of the map provider C | | Conversion method 6 |

Assuming that the first location that is of the target event and that is obtained by the collection server is determined based on the map tile of the map provider A, the collection server converts, according to the corresponding conversion method 1 used for converting the map tile of the map provider A into the general map tile, location information that is of the target event and that is based on the map tile of the map provider A into location information of the general map tile.

In an optional manner of this embodiment of this application, when the first location obtained by the collection server is determined based on a map-provider map tile, the first information that includes the first location and that is collected by the collection server may further include identification information of the map-provider map tile, so that the collection server can determine a conversion method based on the identification information.

Case 2: A method for converting between the general map tile and a longitude-and-latitude location is determined in this embodiment of this application.

In case 2, the collection server further needs to set a method for converting between the general map tile and a longitude-and-latitude location. There may be a plurality of methods for converting between the general map tile and the longitude-and-latitude location. For example, in this embodiment of this application, the method for converting between the general map tile and the longitude-and-latitude location in this embodiment of this application may be determined based on a method for calculating a correspondence between a map-provider map tile and the longitude-and-latitude location.

Further, in an actual process of transmitting an event location, the foregoing event location transmission method may be detailed as three phases, for example, a collection phase, an encoding phase, and a decoding phase, which are separately described below.

### Phase 1: Collection phase

In the collection phase in this embodiment of this application, the collection server mainly obtains first information of a target event, where the first information includes a first location of the target event.

In this embodiment of this application, the first location collected by the collection server have a plurality of cases, and is not specifically limited to the following cases:
Case 1: The first location that is of the target event and that is obtained by the collection server is a longitude-and-latitude location of the target event.
Case 2: The first location that is of the target event and that is obtained by the collection server is location information based on a map-provider map tile.

Further, in case 2, in an optional manner of this embodiment of this application, the first information collected by the collection server further includes an identifier of the map-provider map tile.

In an optional manner of this embodiment of this application, the first location is represented by using coordinates of the map tile and a location shift of the target event relative to an anchor point of the map tile, so that a location, a region shape, and the like of the target event can be obtained based on the first location.

The region shape of the target event may be in various forms such as a point, a line, and a plane, or may be in a combination form of a plurality of points, a plurality of lines, a plurality of planes, and the like.

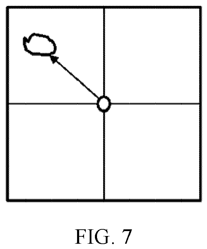

For example, as shown in FIG. 7, it is assumed that the target event is a polygon shown in the figure, and a central point of a map tile in which the target event is located is selected as an anchor point. Therefore, a specific location, a region shape, and the like of the target event can be described by using a location shift of the target event relative to the anchor point and coordinates of the map tile in which the target event is located.

### Phase 2: Encoding phase

In this embodiment of this application, it may be understood that in the encoding phase, the collection server converts the collected first location of the target event into general location information based on the general map tile. In other words, the collection server encodes the collected first location of the target event, to obtain the general location information that is of the target event and that is based on the general map tile.

For example, it is assumed that the first location included in the first information collected by the collection server is a longitude-and-latitude location of the target event.

The collection server converts the first location into the general location information according to the method for converting between the longitude-and-latitude location and the general map tile. The general location information includes coordinates of the general map tile and a location shift relative to an anchor point of the general map tile.

For example, it is assumed that the first location included in the first information collected by the collection server is location information that is of the target event and that is determined based on the map tile of the map provider C. The collection server determines, based on an identifier of the map tile of the map provider C, a method for converting between the map-provider map tile and the general map tile. For example, it is determined that the method for converting between the map tile of the map provider C and the general map tile is the conversion method 6.

In this case, the collection server converts the first location into the general location information according to the conversion method 6. The general location information includes coordinates of the general map tile and a location shift relative to an anchor point of the general map tile.

### Phase 3: Decoding phase

In this embodiment of this application, the decoding phase may be understood as a phase of converting the target event into second information of the target event based on the general location information that is determined based on the general map tile. In other words, the collection server decodes the received general location information of the target event, to obtain the second information of the target event.

In this embodiment of this application, the second information includes a second location of the target event. The second location may be the longitude-and-latitude location of the target event, or the second location may be location information that is of the target event and that is obtained based on a second map tile.

The receiving server in this embodiment of this application may be a map provider cooperating with the collection server, and/or a related management department. The second map tile is a map tile adapted to the receiving server.

For example, it is assumed that the second location that is of the target event and that needs to be determined by the receiving server is the longitude-and-latitude location of the target event. In this case, the receiving server converts the general location information into the second location according to the method for converting between the general map tile and the longitude-and-latitude location. The general location information includes coordinates of the general map tile and a location shift relative to an anchor point of the general map tile.

For example, it is assumed that the second location that is of the target event and that needs to be determined by the receiving server is location information that is of the target event and that is determined based on a map-provider map tile adapted to the receiving server. For example, the second location is location information that is of the target event and that is determined based on the map tile of the map provider C. In this case, the receiving server converts the general location information into the second location according to the method for converting between the general map tile and the map tile of the map provider C. The general location information includes coordinates of the general map tile and a location shift relative to an anchor point of the general map tile.

To present technical solutions provided in this application more clearly, a plurality of embodiments are provided below to describe the event location transmission method provided in this application.

It should be noted that the following descriptions are merely examples of the technical solutions provided in this application, but do not constitute a limitation on the technical solutions provided in this application. Any manner obtained by combining or transforming the following embodiments to resolve a technical problem of this application shall fall within the protection scope of this application.

### Embodiment 1: Interaction between one collection server and one receiving server

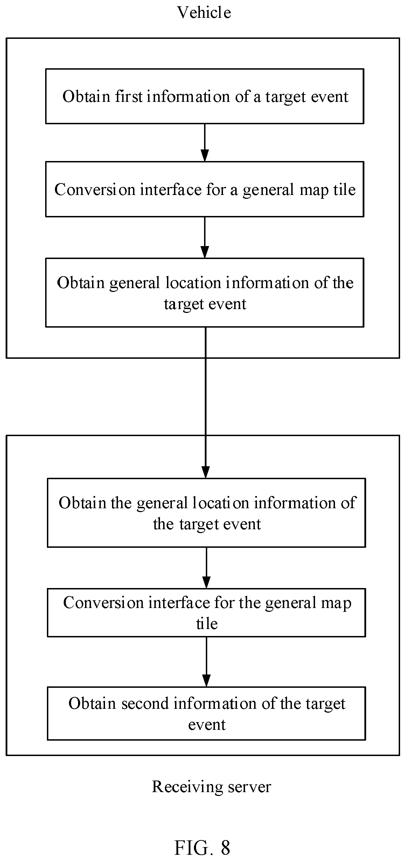

It is assumed that a current transmission scenario of an event location is shown in FIG. 8. The collection server is a vehicle A. The receiving server is the map provider A. There is one target event.

The vehicle A obtains first information of the target event. The first information may include a type of the target event, a first location of the target event, and the like. The first location of the target event may be represented by a longitude and a latitude, or may be represented based on a map-provider map tile.

The vehicle A inputs the first information into a conversion interface that is for a general map tile and that is provided for the vehicle A, thereby obtaining general location information that is of the target event and that is based on the general map tile. The conversion interface for the general map tile is configured to convert the first location into the general location information according to a corresponding conversion method.

In an optional manner of this embodiment of this application, the general location information includes a type of the target event, coordinates of the general map tile, and a shift of the target event relative to an anchor point of the general map tile.

It should be noted that the conversion interface for the general map tile is configured to convert only location information obtained based on a map tile of a qualified map provider.

The collection server sends the general location information to the receiving server.

To ensure security better, the collection server may encrypt the general location information, and send encrypted general location information to the receiving server.

After receiving the general location information, the receiving server inputs, into the conversion interface for the general map tile, the general location information and an identifier of a map-provider map tile adapted to the receiving server, thereby obtaining location information that is of the target event and that is based on the map-provider map tile adapted to the receiving server; or inputs the general location information into the conversion interface for the general map tile, thereby obtaining information about a longitude-and-latitude location of the target event.

### Embodiment 2: Interaction among a plurality of collection servers and a plurality of receiving servers

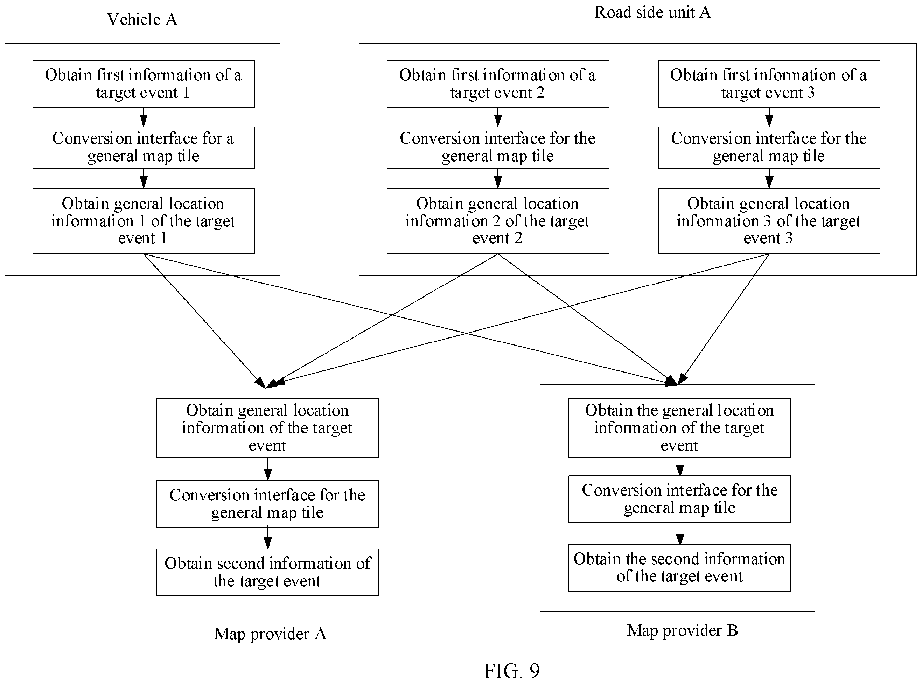

It is assumed that a current transmission scenario of an event location is shown in FIG. 9. The collection servers are a vehicle A and a road side unit A. The receiving servers are a map provider A and a map provider B. Currently, there are three target events: a target event 1, a target event 2, and a target event 3.

The vehicle A obtains first information of the target event 1. The first information of the target event 1 may include a type of the target event 1, a first location of the target event 1, and the like. The road side unit A obtains first information of the target event 2 and first information of the target event 3. The first information of the target event 2 may include a type of the target event 2, a first location of the target event 2, and the like. The first information of the target event 3 may include a type of the target event 3, a first location of the target event 3, and the like.

The first location of the target event may be represented by a longitude and a latitude, or may be represented based on a map-provider map tile. For ease of description, it is assumed that in this embodiment of this application, the first locations corresponding to the target events 1 to 3 are all location information obtained based on a map tile.

The vehicle A inputs the first information of the target event 1 into a conversion interface that is for the general map tile and that is adapted to the vehicle A, thereby obtaining general location information that is of the target event 1 and that is based on the general map tile. The road side unit A inputs the first information of the target event 2 into a conversion interface that is for the general map tile and that is adapted to the road side unit A, thereby obtaining general location information that is of the target event 2 and that is based on the general map tile. The road side unit A inputs the first information of the target event 3 into a conversion interface that is for the general map tile and that is adapted to the road side unit A, thereby obtaining general location information that is of the target event 3 and that is based on the general map tile.

The conversion interface for the general map tile is configured to convert the first location of the target event into the general location information of the target event according to a corresponding conversion method.

In an optional manner of this embodiment of this application, the general location information includes a type of the target event, coordinates of the general map tile, and a shift of the target event relative to an anchor point of the general map tile.

It should be noted that the conversion interface for the general map tile is configured to convert only location information obtained based on a map tile of a qualified map provider.

Further, it is assumed that correspondences between the collection servers and the receiving servers are shown in the following Table 4.

| Collection server | Receiving server |
|---|---|
| Vehicle A | Map provider A |
| | Map provider B |
| Road side unit A | Map provider A |
| | Map provider B |

After obtaining the general location information of the target event 1, the vehicle A sends the general location information 1 of the target event 1 to the map provider A and the map provider B based on content in Table 2. After obtaining the general location information of the target event 2, the road side unit A sends the general location information 2 of the target event 2 to the map provider A and the map provider B based on content in Table 2. After obtaining the general location information of the target event 3, the road side unit A sends the general location information 3 of the target event 3 to the map provider A and the map provider B based on content in Table 2.

After receiving the general location information 1 of the target event 1, the map provider A inputs the general location information 1 and an identifier of a map tile of the map provider A into the conversion interface for the general map tile, thereby obtaining location information that is of the target event 1 and that is based on the map tile of the map provider A.

Optionally, the map provider A may input the general location information 1 into the conversion interface for the general map tile, thereby obtaining a longitude-and-latitude location information of the target event 1.

After receiving the general location information 2 of the target event 2, the map provider A inputs the general location information 2 and an identifier of a map tile of the map provider A into the conversion interface for the general map tile, thereby obtaining location information that is of the target event 2 and that is based on the map tile of the map provider A.

Optionally, the map provider A may input the general location information 2 into the conversion interface for the general map tile, thereby obtaining a longitude-and-latitude location information of the target event 2.

After receiving the general location information 3 of the target event 3, the map provider A inputs the general location information 3 and an identifier of a map tile of the map provider A into the conversion interface for the general map tile, thereby obtaining location information that is of the target event 3 and that is based on the map tile of the map provider A.

Optionally, the map provider A may input the general location information 3 into the conversion interface for the general map tile, thereby obtaining a longitude-and-latitude location information of the target event 3.

Similarly, after receiving the general location information of the target event, the map provider B inputs the general location information and an identifier of a map tile of the map provider B into the conversion interface for the general map tile, thereby obtaining location information that is of the target event and that is based on the map tile of the map provider B.

Optionally, the map provider B may input the general location information into the conversion interface for the general map tile, thereby obtaining a longitude-and-latitude location information of the target event.

To ensure security better, the vehicle A and/or the road side unit A may encrypt the general location information, and send encrypted general location information to a corresponding receiving server.

From the foregoing descriptions of solutions of this application, it may be understood that, to implement the foregoing functions, each of the foregoing devices includes a hardware structure and/or a software unit for performing the functions. A person skilled in the art should be easily aware that, with reference to units and algorithm steps in the examples described in embodiments disclosed in this specification, the present application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present application.

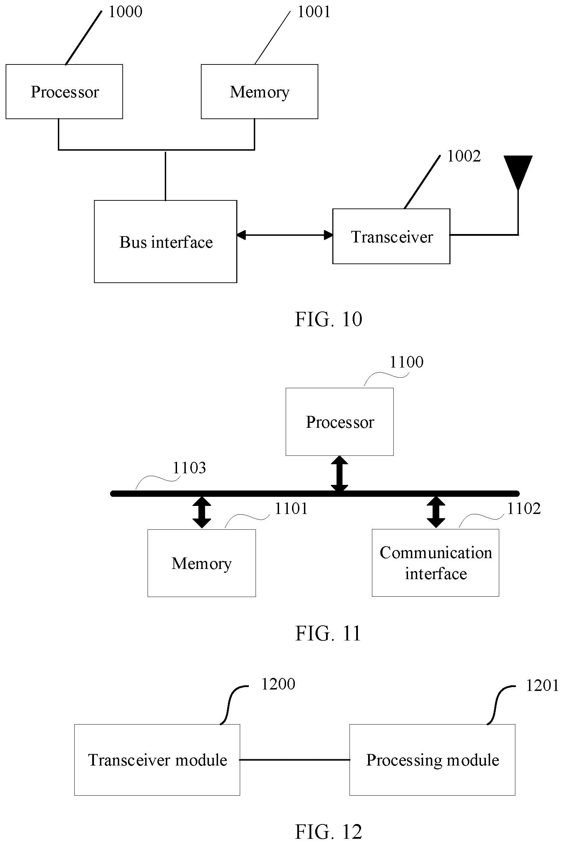

As shown in FIG. 10, an embodiment of the present application provides an event location transmission apparatus. The event location transmission apparatus includes a processor 1000, a memory 1001, and a transceiver 1002.

The processor 1000 is responsible for management of bus architecture and general processing. The memory 1001 may store data used by the processor 1000 during operation execution. The transceiver 1002 is configured to receive and send data under control of the processor 1000, and perform data communication with the memory 1001.

The bus architecture may include any quantity of interconnected buses and bridges, which are specifically linked together by various circuits of one or more processors represented by the processor 1000 and a memory represented by the memory 1001. The bus architecture may further link various other circuits such as a peripheral device, a voltage regulator, and a power management circuit together. These are all well-known in the art, and therefore are not further described in this specification. A bus interface provides an interface. The processor 1000 is responsible for management of the bus architecture and general processing. The memory 1001 may store data used by the processor 1000 during operation execution.

A procedure disclosed in embodiments of the present application may be applied to the processor 1000, or implemented by the processor 1000. In an implementation process, steps of a monitoring procedure for safe driving may be completed by an integrated logic circuit of hardware in the processor 1000 or by an instruction in a form of software. The processor 1000 may be a general-purpose processor, a digital signal processor, an application-specific integrated circuit, a field programmable gate array or another programmable logical device, a discrete gate or transistor logic device, or a discrete hardware component, and may implement or perform the method, steps, and logical block diagrams disclosed in embodiments of the present application. The general-purpose processor may be a microprocessor or any conventional processor or the like. The steps of the method disclosed with reference to embodiments of the present application may be directly performed by a hardware processor, or by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1001. The processor 1000 reads information in the memory 1001, and completes a step of a signal processing procedure in combination with hardware of the processor 1000.

In an optional manner of this application, the event location transmission apparatus is a collection server. In this case, the processor 1000 is configured to read a program in the memory 1001 to perform the method described in FIG. 3.

In another optional manner of this application, the event location transmission apparatus is a receiving server. In this case, the processor 1000 is configured to read a program in the memory 1001 to perform the method described in FIG. 3.

As shown in FIG. 11, this application provides an event location transmission apparatus. The apparatus includes a processor 1100, a memory 1101, and a communication interface 1102.

The processor 1100 is responsible for management of bus architecture and general processing. The memory 1101 may store data used by the processor 1100 during operation execution. The communication interface 1102 is configured to receive and send data under control of the processor 1100, and perform data communication with the memory 1101. The communication interface 1102 may alternatively be a transceiver or the like.

The processor 1100 may be a central processing unit (central processing unit, CPU), a network processor (network processor, NP), or a combination of a CPU and an NP. The processor 1000 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The memory 1101 may include any medium that can store program code, for example, a USB flash drive, a removable hard disk, a read-only memory (read-only memory, ROM), a random access memory (random access memory, RAM), a magnetic disk, or an optical disc.

The processor 1100, the memory 1101, and the communication interface 1102 are connected to each other. Optionally, the processor 1100, the memory 1101, and the communication interface 1102 are connected to each other through a bus 1103. The bus 1103 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used in FIG. 11 to represent the bus. However, it does not indicate that there is only one bus or only one type of bus.

Specifically, when the event location transmission apparatus is a collection server, the processor 1100 is configured to read a program in the memory 1101 and execute the following steps:
obtaining first information of a target event, where the first information includes a first location of the target event; determining, based on the first information, general location information that is of the target event and that is based on a general map tile; and sending the general location information to at least one receiving server, so that the receiving server determines second information based on the general location information, where the second information includes a second location of the target event.

Specifically, when the event location transmission apparatus is a receiving server, the processor 1100 is configured to read a program in the memory 1101 and execute the following steps:
receiving general location information from a collection server, where the general location information is used to determine a location of a target event in a general map tile, the general location information is obtained based on first information of the target event, and the first information includes a first location of the target event; and determining second information based on the general location information, where the second information includes a second location of the target event.

As shown in FIG. 12, the present application provides an event location transmission apparatus. The apparatus includes a transceiver module 1200 and a processing module 1201.

In an optional manner of this embodiment of this application, when the event location transmission apparatus is a collection server, the apparatus includes a transceiver module 1200 and a processing module 1201, to perform the following content:

The transceiver module 1200 is configured to obtain first information of a target event, where the first information includes a first location of the target event.

The processing module 1201 is configured to determine, based on the first information, general location information that is of the target event and that is based on a general map tile.

The transceiver module 1200 is configured to send the general location information to at least one receiving server.

In an implementation, the processing module 1201 is specifically configured to:
if the first location in the first information is a longitude-and-latitude location of the target event, convert the first location into the general location information based on a rule of conversion between the longitude-and-latitude location and the general map tile.

In an implementation, the processing module 1201 is specifically configured to:
if the first location in the first information is a location that is of the target event and that is determined based on a first map tile, convert the first location into the general location information based on a rule of conversion between the first map tile and the general map tile.

In an implementation, the processing module 1201 is specifically configured to:
determine, based on the rule of conversion between the first map tile and the general map tile, coordinates that are of the general map tile and that correspond to the first map tile; and
determine, based on the coordinates of the general map tile and an anchor point of the general map tile, location information that is of the target event and that is based on the general map tile.

In an implementation, the anchor point of the general map tile is a central point or a corner point of the general map tile; or the anchor point of the general map tile is obtained by performing encoding calculation based on the coordinates of the general map tile.

In an implementation, the processing module 1201 is specifically configured to:
equally divide the general map tile horizontally and vertically based on a horizontal coordinate and a vertical coordinate in encoded coordinates; and determine, based on hierarchical coordinates in the encoded coordinates, the anchor point from the general map tile that is equally divided horizontally and vertically.

In an optional manner of this embodiment of this application, when the event location transmission apparatus is a receiving server, the apparatus includes a transceiver module 1200 and a processing module 1201, to perform the following content:
The transceiver module 1200 is configured to receive general location information from a collection server, where the general location information is used to determine a location of a target event in a general map tile, the general location information is obtained based on first information of the target event, and the first information includes a first location of the target event.

The processing module 1201 is configured to determine second information based on the general location information, where the second information includes a second location of the target event.

In an implementation, the processing module 1201 is specifically configured to:
convert the general location information into the second location based on a rule of conversion between a longitude-and-latitude location and the general map tile, where the second location is the longitude-and-latitude location of the target event.

In an implementation, the processing module 1201 is specifically configured to:
convert the general location information into the second location based on a rule of conversion between a second map tile and the general map tile, where the second location is a location that is of the target event and that is determined based on the second map tile.

In an implementation, the processing module 1201 is specifically configured to:
determine, based on the rule of conversion between the second map tile and the general map tile, coordinates that are of the second map tile and that correspond to the general map tile; and
determine, based on the coordinates of the second map tile and an anchor point of the second map tile, location information that is of the target event and that is based on the second map tile.

In an implementation, the anchor point of the second map tile is a central point or a corner point of the second map tile; or the anchor point of the second map tile is obtained by performing encoding calculation based on the coordinates of the second map tile.

In an implementation, the processing module 1201 is specifically configured to:
equally divide the second map tile horizontally and vertically based on a horizontal coordinate and a vertical coordinate in encoded coordinates; and determine, based on hierarchical coordinates in the encoded coordinates, the anchor point from the second map tile that is equally divided horizontally and vertically.

Functions of the transceiver module 1200 and the processing module 1201 shown in FIG. 12 may be executed by the processor 1000 by running the program in the memory 1001, may be independently executed by the processor 1000, may be executed by the processor 1100 by running the program in the memory 1101, or may be independently executed by the processor 1100.

In some possible implementations, various aspects of the event location transmission method provided in embodiments of the present application may also be implemented in a form of a program product. The program product includes program code. When the program code runs on a computer device, the program code is used to enable the computer device to perform the steps in the event location transmission method according to various example implementations of the present application described in this specification.

The program product may be any combination of one or more readable media. The readable medium may be a readable signal medium or a readable storage medium. For example, the readable storage medium may be, but is not limited to, an electrical, a magnetic, an optical, an electromagnetic, an infrared, or a semiconductor system, apparatus, or device, or any combination thereof. More specific examples (a non-exhaustive list) of the readable storage medium include: an electrical connection having one or more conducting wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage component, a magnetic storage component, or any appropriate combination thereof.

An event location transmission program product in an implementation of the present application may use a portable compact disc read-only memory (CD-ROM) and include program code, and may run on a server device. However, the program product of the present application is not limited thereto. In this specification, the readable storage medium may be any tangible medium that includes or stores a program, and the program may be used by or in combination with a communication and transmission apparatus or device.

The readable signal medium may include a data signal propagated in a baseband or as a part of a carrier, where the data signal carries readable program code. The propagated data signal may be in a plurality of forms, including but not limited to an electromagnetic signal, an optical signal, or any appropriate combination thereof. The readable signal medium may alternatively be any readable medium other than the readable storage medium. The readable medium may send, propagate, or transmit a program used by or in combination with a periodic network action system, apparatus, or device.

The program code included in the readable medium may be transmitted by using any appropriate medium, including but not limited to a wireless medium, a wired medium, an optical cable, an RF medium, or any appropriate combination thereof.

The program code used to execute the operations of the present application may be written in any combination of one or more program design languages. The program design languages include object-oriented program design languages such as Java and C++, and further include a conventional procedural program design language such as a "C" language or a similar program design language. The program code may be completely executed on a computing device of a user, partially executed on a user device, executed as an independent software package, partially executed on a computing device of a user and partially executed on a remote computing device, or completely executed on a remote computing device or server. When the program code is executed on the remote computing device, the remote computing device may be connected to the computing device of the user by using any type of network, including a local area network (LAN) or a wide area network (WAN), or may be connected to an external computing device.

An embodiment of this application further provides a computing device-readable storage medium for an event location transmission method, that is, content is not lost after a power failure. The storage medium stores a software program including program code. When the program code is executed on a computing device, any event location transmission solution in the foregoing embodiments of this application can be implemented when the software program is read and executed by one or more processors.

The foregoing describes this application with reference to the block diagrams and/or flowcharts of the method, the apparatus (system), and/or the computer program product in embodiments of this application. It should be understood that a block of the block diagrams and/or flowcharts and a combination of blocks in the block diagrams and/or flowcharts can be implemented by using computer program instructions. These computer program instructions may be provided to a processor of a general-purpose computer, a processor of a special-purpose computer, and/or another programmable data processing apparatus to produce a machine, so that the instructions executed by the processor of the computer and/or the another programmable data processing apparatus create a method for implementing a specified function/action in the block in the flowcharts and/or block diagrams.

Correspondingly, this application may further be implemented by using hardware and/or software (including firmware, resident software, microcode, and the like). Still further, this application may be in a form of a computer program product on a computer-usable or computer-readable storage medium. The computer program product has computer-usable or computer-readable program code implemented in the medium, to be used by an instruction execution system or used in combination with an instruction execution system. In the context of this application, the computer-usable or computer-readable medium may be any medium, and may include, store, communicate, transmit, or transfer a program, for use by an instruction execution system, apparatus, or device or used in combination with an instruction execution system, apparatus, or device.

This application describes a plurality of embodiments in detail with reference to a plurality of flowcharts. However, it should be understood that the flowcharts and related descriptions of corresponding embodiments thereof are merely examples for ease of understanding, and shall not constitute any limitation on this application. Each step in each flowchart does not necessarily need to be performed. For example, some steps may be skipped. In addition, an execution sequence of each step is not fixed, and is not limited to that shown in the figure. The execution sequence of each step is determined based on a function and internal logic of the step.

A plurality of embodiments described in this application may be randomly combined, or steps may intersect with each other for execution. An execution sequence of the embodiments or an execution sequence of the steps of the embodiments is not fixed, and is not limited to that shown in the figure. The execution sequence of the embodiments and a cross execution sequence of the steps of the embodiments should be determined by using functions and internal logic of the embodiments and the steps.

Although this application is described with reference to specific features and the embodiments thereof, it is obvious that various modifications and combinations may be made to them without departing from the scope of this application. Correspondingly, the specification and accompanying drawings are merely example description of this application defined by the appended claims, and are considered as any of or all modifications, variations, combinations, or equivalents that cover the scope of this application. Obviously, a person skilled in the art may make various modifications and variations to this application without departing from the scope of this application. In this way, this application is intended to cover these modifications and variations of this application provided that they fall within the scope defined by the claims of this application and their equivalent technologies.

## Claims

1. An event location transmission system, wherein the transmission system comprises a collection server and at least one receiving server, wherein
the collection server is configured to: obtain first information of a target event, wherein the first information comprises a first location of the target event; determine, based on the first information, general location information that is of the target event and that is based on a general map tile; and send the general location information to the at least one receiving server; and
the receiving server is configured to: receive the general location information from the collection server, and determine second information based on the general location information, wherein the second information comprises a second location of the target event.

2. An event location transmission method, wherein the method comprises:
obtaining first information of a target event, wherein the first information comprises a first location of the target event;
determining, based on the first information, general location information that is of the target event and that is based on a general map tile; and
sending the general location information to at least one receiving server, so that the receiving server determines second information based on the general location information, wherein the second information comprises a second location of the target event.

3. The method according to claim 2, wherein the determining, based on the first information, general location information that is of the target event and that is based on a general map tile comprises:
when the first location in the first information is a longitude-and-latitude location of the target event, converting the first location into the general location information based on a rule of conversion between the longitude-and-latitude location and the general map tile.

4. The method according to claim 2, wherein the determining, based on the first information, general location information that is of the target event and that is based on a general map tile comprises:
when the first location in the first information is a location that is of the target event and that is determined based on a first map tile, converting the first location into the general location information based on a rule of conversion between the first map tile and the general map tile.

5. The method according to claim 4, wherein the converting the first location into the general location information based on a rule of conversion between the first map tile and the general map tile comprises:
determining, based on the rule of conversion between the first map tile and the general map tile, coordinates that are of the general map tile and that correspond to the first map tile; and
determining, based on the coordinates of the general map tile and an anchor point of the general map tile, location information that is of the target event and that is based on the general map tile.

6. The method according to claim 5, wherein the anchor point of the general map tile is a central point or a corner point of the general map tile; or
the anchor point of the general map tile is obtained by performing encoding calculation based on the coordinates of the general map tile.

7. The method according to claim 6, wherein that the anchor point of the general map tile is obtained by performing encoding calculation based on the coordinates of the general map tile comprises:
equally dividing the general map tile horizontally and vertically based on a horizontal coordinate and a vertical coordinate in encoded coordinates; and
determining, based on hierarchical coordinates in the encoded coordinates, the anchor point from the general map tile that is equally divided horizontally and vertically.

8. An event location transmission method, wherein the method comprises:
receiving general location information from a collection server, wherein
the general location information is used to determine a location of a target event in a general map tile, the general location information is obtained based on first information of the target event, and the first information comprises a first location of the target event; and
determining second information based on the general location information, wherein the second information comprises a second location of the target event.

9. The method according to claim 8, wherein the determining second information based on the general location information comprises:
converting the general location information into the second location based on a rule of conversion between a longitude-and-latitude location and the general map tile, wherein the second location is the longitude-and-latitude location of the target event.

10. The method according to claim 8, wherein the determining second information based on the general location information comprises:
converting the general location information into the second location based on a rule of conversion between a second map tile and the general map tile, wherein the second location is a location that is of the target event and that is determined based on the second map tile.

11. The method according to claim 10, wherein the converting the general location information into the second location based on a rule of conversion between a second map tile and the general map tile comprises:
determining, based on the rule of conversion between the second map tile and the general map tile, coordinates that are of the second map tile and that correspond to the general map tile; and
determining, based on the coordinates of the second map tile and an anchor point of the second map tile, location information that is of the target event and that is based on the second map tile.

12. The method according to claim 11, wherein the anchor point of the second map tile is a central point or a corner point of the second map tile; or
the anchor point of the second map tile is obtained by performing encoding calculation based on the coordinates of the second map tile.

13. The method according to claim 12, wherein that the anchor point of the second map tile is obtained by performing encoding calculation based on the coordinates of the second map tile comprises:
equally dividing the second map tile horizontally and vertically based on a horizontal coordinate and a vertical coordinate in encoded coordinates; and
determining, based on hierarchical coordinates in the encoded coordinates, the anchor point from the second map tile that is equally divided horizontally and vertically.

14. An event location transmission apparatus, comprising:
a transceiver module, configured to obtain first information of a target event, wherein the first information comprises a first location of the target event; and
a processing module, configured to determine, based on the first information, general location information that is of the target event and that is based on a general map tile, wherein
the transceiver module is configured to send the general location information to at least one receiving server.

15. An event location transmission apparatus, comprising:
a transceiver module, configured to receive general location information from a collection server, wherein the general location information is used to determine a location of a target event in a general map tile, the general location information is obtained based on first information of the target event, and the first information comprises a first location of the target event; and
a processing module, configured to determine second information based on the general location information, wherein the second information comprises a second location of the target event.

16. An event location transmission apparatus, comprising one or more processors, a memory, and a transceiver, wherein
the memory is configured to store one or more programs and data information, wherein the one or more programs comprise instructions; and
the processor is configured to perform the method according to any one of claims 2 to 7 or the method according to any one of claims 8 to 13 based on the at least one or more programs in the memory.

17. An event location transmission chip, wherein the chip is configured to invoke a computer program from a memory and run the computer program, so that the transmission chip is enabled to perform the method according to any one of claims 2 to 7 or the method according to any one of claims 8 to 13.

18. A computer-readable storage medium, comprising computer instructions, wherein when the computer instructions are run on an event location transmission apparatus, the apparatus is enabled to perform the method according to any one of claims 2 to 7 or the method according to any one of claims 8 to 13.

19. A computer program product, comprising computer program code, wherein when the computer program code is run by a transceiver module and a processing module in an event location transmission apparatus or a transceiver and a processor in an event location transmission apparatus, the apparatus is enabled to perform the method according to any one of claims 2 to 7 or the method according to any one of claims 8 to 13.
